# EUROPEAN PATENT SPECIFICATION

(11) **EP 3 293 643 B1**
(45) Date of publication and mention of the grant of the patent: **21.12.2022**
(21) Application number: 17001077.1
(22) Date of filing: 23.06.2017
(51) Int. Cl.: G06F 16/22

(54) **PAGING MECHANISM FOR IN-MEMORY DATA MANAGEMENT SYSTEM**
PAGING-MECHANISMUS FÜR IN-MEMORY-DATENMANAGEMENTSYSTEM
MÉCANISME DE RADIOMESSAGERIE POUR SYSTÈME DE GESTION DE DONNÉES EN MÉMOIRE

(30) Priority: 09.09.2016 US 201615261700
(43) Date of publication of application: 14.03.2018
(73) Proprietor: SAP SE, 69190 Walldorf (DE)
(72) Inventor: Gropengiesser, Francis, 69190 Walldorf (DE); Schwindt, Jan-Markus, 69190 Walldorf (DE); Weidner, Martin, 69190 Walldorf (DE); Schneider, Robert, 69190 Walldorf (DE)
(74) Representative: Müller-Boré & Partner Patentanwälte PartG mbB

(56) References cited:
- EP-A1- 3 026 583
- US-A1- 2007 088 929
- US-A1- 2012 179 703
- US-A1- 2014 279 961
- VERMA SUDHIR ET AL: "In-Memory Database Optimization Using Statistical Estimation", 2015 IEEE INTERNATIONAL CONFERENCE ON CLOUD COMPUTING IN EMERGING MARKETS (CCEM), IEEE, 25 November 2015 (2015-11-25), pages 177-184, XP032883840, DOI: 10.1109/CCEM.2015.19 [retrieved on 2016-03-18]
- Anonymous: "Trie - Wikipedia, the free encyclopedia", , 25 January 2013 (2013-01-25), XP055641799, Retrieved from the Internet: URL:https://web.archive.org/web/2013012511 5830/https://en.wikipedia.org/wiki/Trie [retrieved on 2019-11-12]

## Description

### BACKGROUND

With the steady decline of the price of computer memory, on-disk databases are being used less in favor of in-memory databases due to the faster processing and data retrieval speeds offered by in-memory databases. Enterprise systems may have sufficiently large amounts of memory in which in-memory DBMS may operate. Such systems typically do not have to deal with lack of main memory. Commodity computing systems (e.g., personal computers, desktop computers, laptop computers, etc.) generally have less main memory. Thus, when implementing an in-memory DBMS on a commodity computing system, data in the main memory is often paged in to and out from secondary storage (e.g., hard disk) due to the limited amount of main memory.

EP 3 026 583 A1 relates to a database system comprising a combination of on-disk storage and in-memory storage. A plurality of records that comprise a table are stored in a plurality of fragments that include at least a delta fragment and a main fragment retained in the on-disk storage. Each fragment has visibility data structures to enable multi-version concurrency control. Each fragment can be compressed using dictionary compression and n-bits compression. The fragments are loaded into main system memory in the in-memory storage from the on-disk storage if they are accessed for read operations or write operations and are not already in memory. A plurality of lockless read and write operations are concurrently performed, while providing snapshot isolation, on the at least one of the plurality of fragments while the at least one of the plurality of fragments is in the main system memory.

US 2014/2779961 A1 relates to data records of a data set which can be stored in multiple main part fragments retained in on-disk storage. Each fragment can include a number of data records that is equal to or less than a defined maximum fragment size. Using a compression that is optimized for each fragment, each fragment can be compressed. After reading at least one of the fragments into main system memory from the on-disk storage, an operation can be performed on the fragment or fragments while the in the main system memory.

### SUMMARY

The object of the invention is solved by the features of the independent claims. Further embodiments are the subject-matter of the dependent claims. In some embodiments, a non-transitory machine-readable medium store a program. The program receives a request for a logical data structure of an in-memory database. The program further determines a size of fragments of memory for the logical data structure based on a set of criteria. The program also requests a set of segments of memory. Upon receiving the set of segments of memory, the program further generates a plurality of fragments of memory from the set of segments of memory based on the size of fragments of memory. The program also groups the plurality of fragments of memory into the logical data structure. The plurality of fragments of memory are configured to store data of the logical data structure. The program further loads the plurality of fragments of memory into memory.

In some embodiments, the program further determines a number of rows per fragment of memory. The determining of the size of fragments of memory may be further based on the number of rows per fragment. In some embodiments, the set of criteria includes statistical data associated with data to be stored in the logical data structure. The in-memory database may be a column-oriented database. In some embodiments, the logical data structure is for a partition of a table of the in-memory database. The program may further unload at least one fragment of memory from the memory into a secondary storage using a paging technique in a plurality of paging techniques.

In some embodiments, the request is a first request, the logical data structure is a first logical data structure, the size of fragments of memory is a first size of fragments of memory, the set of segments of memory is a first set of segments of memory, and the plurality of fragments is a first plurality of fragments. The program may further receive a second request for a second logical data structure of the in-memory database. The program may also determine a second size of fragments of memory for the second logical data structure based on the set of criteria, wherein the second size and the first size are different. The program may further request a second set of segments of memory. Upon receiving the second set of segments of memory, the program may also generate a second plurality of fragments of memory from the second set of segments of memory based on the second size of fragments of memory. The program may further group the second plurality of fragments of memory into the second logical data structure. The second plurality of fragments of memory are configured to store data of the second logical data structure. The program may also load the second plurality of fragments of memory into the memory.

In some embodiments, a method receives a request for a logical data structure of an in-memory database. The method further determines a size of fragments of memory for the logical data structure based on a set of criteria. The method also requests a set of segments of memory. Upon receiving the set of segments of memory, the method further generates a plurality of fragments of memory from the set of segments of memory based on the size of fragments of memory. The method also groups the plurality of fragments of memory into the logical data structure. The plurality of fragments of memory are configured to store data of the logical data structure. The method further loads the plurality of fragments of memory into memory.

In some embodiments, the method further determines a number of rows per fragment of memory. The determining of the size of fragments of memory may be further based on the number of rows per fragment. In some embodiments, the set of criteria includes statistical data associated with data to be stored in the logical data structure. The in-memory database may be a column-oriented database. In some embodiments, the logical data structure is for a partition of a table of the in-memory database. The method may further unload at least one fragment of memory from the memory into a secondary storage using a paging technique in a plurality of paging techniques.

In some embodiments, the request is a first request, the logical data structure is a first logical data structure, the size of fragments of memory is a first size of fragments of memory, the set of segments of memory is a first set of segments of memory, and the plurality of fragments is a first plurality of fragments. The method may further receive a second request for a second logical data structure of the in-memory database. The method may also determine a second size of fragments of memory for the second logical data structure based on the set of criteria, wherein the second size and the first size are different. The method may further request a second set of segments of memory. Upon receiving the second set of segments of memory, the method may also generate a second plurality of fragments of memory from the second set of segments of memory based on the second size of fragments of memory. The method may further group the second plurality- of fragments of memory into the second logical data structure. The second plurality of fragments of memory are configured to store data of the second logical data structure. The method may also load the second plurality of fragments of memory into the memory.

In some embodiments, a system includes a set of processing units and a non-transitory computer-readable medium storing instructions. The instructions cause at least one processing unit to receive a request for a logical data structure of an in-memory database. The instructions further cause the at least one processing unit to determine a size of fragments of memory for the logical data structure based on a set of criteria. The instructions also cause the at least one processing unit to request a set of segments of memory. Upon receiving the set of segments of memory, the instructions further cause the at least one processing unit to generate a plurality of fragments of memory from the set of segments of memory based on the size of fragments of memory. The instructions also cause the at least one processing unit to group the plurality of fragments of memory into the logical data structure. The plurality of fragments of memory are configured to store data of the logical data structure. The instructions further cause the at least one processing unit to load the plurality of fragments of memory into memory.

In some embodiments, the instructions further cause the at least one processing unit to determine a number of rows per fragment of memory. The determining of the size of fragments of memory may be further based on the number of rows per fragment. In some embodiments, the in-memory database is a column-oriented database. The logical data structure may be for a partition of a table of the in-memory database. In some embodiments, instructions may further cause the at least one processing unit to unload at least one fragment of memory from the memory into a secondary storage using a paging technique in a plurality of paging techniques.

In some embodiments, the request is a first request, the logical data structure is a first logical data structure, the size of fragments of memory is a first size of fragments of memory, the set of segments of memory is a first set of segments of memory, and the plurality of fragments is a first plurality of fragments. The instructions may further cause the at least one processing unit to receive a second request for a second logical data structure of the in-memory database. The instructions may also cause the at least one processing unit to determine a second size of fragments of memory for the second logical data structure based on the set of criteria, wherein the second size and the first size are different. The instructions may further cause the at least one processing unit to request a second set of segments of memory. Upon receiving the second set of segments of memory, the instructions may also cause the at least one processing unit to generate a second plurality of fragments of memory from the second set of segments of memory based on the second size of fragments of memory. The instructions may further cause the at least one processing unit to group the second plurality of fragments of memory into the second logical data structure. The second plurality of fragments of memory are configured to store data of the second logical data structure. The instructions may also cause the at least one processing unit to load the second plurality of fragments of memory into the memory.

The following detailed description and accompanying drawings provide a better understanding of the nature and advantages of the present invention.

### BRIEF DESCRIPTION OF THE DRAWINGS

FIG. 1 illustrates a system that includes a DBMS according to some embodiments.
FIG. 2 illustrates an example data flow through the system illustrated in FIG. 1 according to some embodiments.
FIG. 3 illustrates another example data flow through the system illustrated in FIG. 1 according to some embodiments.
FIG. 4 illustrates an example table according to some embodiments.
FIG. 5 illustrates an example data structure for storing data of a column of the table illustrated in FIG. 4 according to some embodiments.
FIG. 6 illustrates an example layout of memory used to store the data structure illustrated in FIG. 5 according to some embodiments.
FIG. 7 illustrates an example table of fragment identifiers and memory addresses according to some embodiments.
FIG. 8 illustrates a process for creating a logical data structure according to some embodiments.
FIG. 9 illustrates an exemplary computer system, in which various embodiments may be implemented.
FIG. 10 illustrates an exemplary computing device, in which various embodiments may be implemented.
FIG. 11 illustrates system for implementing various embodiments described above.

### DETAILED DESCRIPTION

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below.

Described herein are techniques for managing memory for an in-memory database management system (DBMS). In some embodiments, the in-memory DBMS uses variable-size pages (also referred to as fragments) to store data in databases managed by the in-memory DBMS. The in-memory DBMS may use any number of different paging techniques to manage the loading and unloading of pages into and out of memory. In addition, the in-memory DBMS may use a variety of different types of secondary storage for storing unloaded pages. In some embodiments, the in-memory DBMS uses various different data structures to store data in databases. The in-memory DBMS may manage fragments used to store data structures in a manner that reduces and/or avoids cache misses.

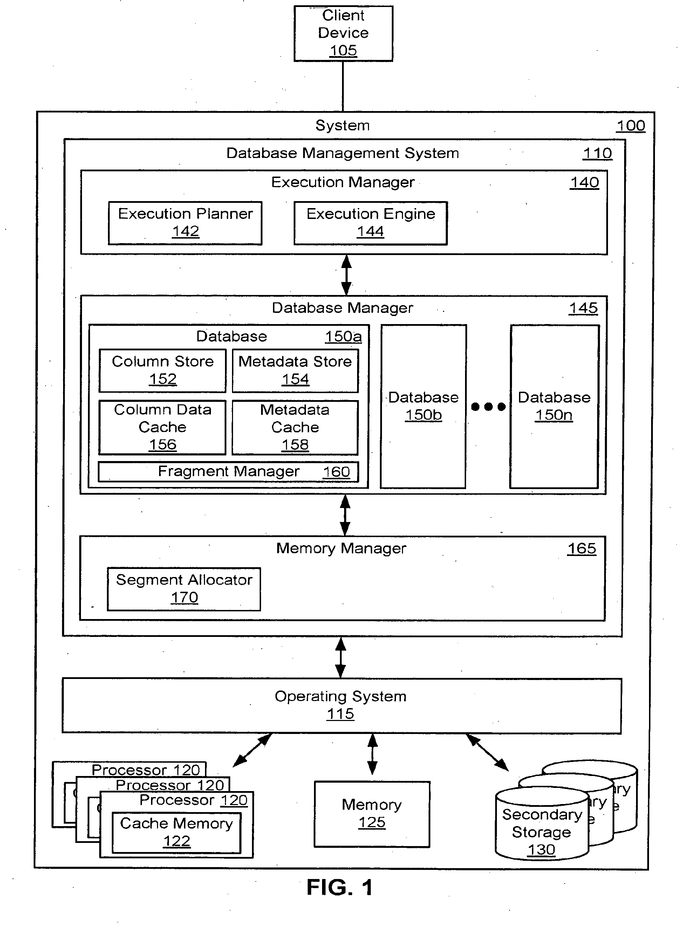

FIG. 1 illustrates a system 100 that includes a DBMS according to some embodiments. In addition, FIG. 1 illustrates client device 105, which is a computing device configured to interact with DBMS 110. Client device 105 may include an application (e.g., a standalone application, a thin-client application such as a web browser, etc.) operating on client device 105 configured to connect to DBMS 110, transmit requests to DBMS 110, and receive responses from DBMS 110. In some embodiments, client device 105 and a device on which system 100 operates are separate devices. In other embodiments, system 100 operates on client device 105. While FIG. 1 shows one client device, one of ordinary skill in the art will realize that any number of client devices may be supported.

As shown in FIG. 1, system 100 includes DBMS 110, operating system 115, processors 120, memory 125, and secondary storages 130. Operating system 115 is configured to manage hardware and software resources. Additionally, operating system 115 provides various services to DBMS 110. For example, operating system 115 may manage a virtual address space and map virtual memory addresses (which are used by DBMS 110) in the virtual address space to physical memory addresses in memory 125. That is, operating system 115 provides an abstraction of memory 125 through the use of the virtual memory space. Operating system 115 also handles the loading of data from secondary storages 130 into memory 125 and the unloading of data from memory 125 to secondary storages 130 (e.g., a swap file or a page file stored in secondary storages 130). In some embodiments, operating system 115 manages virtual memory using pages of virtual memory (also referred to as virtual pages or simply as pages). A virtual page is, in some embodiments, a fixed-length contiguous block of virtual memory. Virtual pages are the smallest unit of data managed by operating system 115, in some embodiments.

Processors 120 are configured to execute program instructions (e.g., instructions of operating system 115 and DBMS 110). Each processor 120 includes cache memory 122 that are configured to store copies of data in memory 125 that are frequently accessed. Cache memory 122 may include any number of levels of cache memory (e.g., L1 cache memory, L2 cache memory, L3 cache memory, etc.). In some embodiments, each processing unit (e.g., core) of a processor 120 has its own cache memory (e.g., L1 cache memory, L2 cache memory, L3 cache memory, etc.). In other embodiments, each processing unit (e.g., core) of a processor 120 has its own cache memory (e.g., L1 cache memory and L2 cache memory) and shares cache memory (e.g., L3 cache memory) with the other processing units of the processor 120.

Memory 125 may be configured to store program instructions that are loadable and executable by processors 120 as well as data generated during the execution of program instructions. Memory 125 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). Memory 125 may include different types of memory, such as static random access memory (SRAM) and/or dynamic random access memory (DRAM).

Secondary storages 130 are non-volatile media configured to store data. Examples of such media includes non-volatile memory (e.g., flash memory), compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device. Although secondary storages 130 are shown in FIG. 1 as being part of system 100, one of ordinary skill in the art will appreciate that one or more secondary storages 130 may be an external storage. In some such embodiments, such external storages may be implemented using a distributed file system (e.g., Hadoop distributed file system (HDFS)), an online file storage service (e.g., Amazon Simple Storage Service (S3)), or any other type of external file storage technology.

DBMS 110 is configured to manage and store data as well as provide client device 105 access to the data. In some embodiments, DBMS 110 provides a set of application programming interfaces (APIs) through which client device 105 accesses the data. As illustrated in FIG. 1, DBMS 100 includes execution manager 140, database (DB) manager 145, and memory manager 165.

Execution manager 140 is responsible for processing commands (e.g., structured query language (SQL) commands) that execution manager 140 receives from client device 105. As shown, execution manager 140 includes execution planner 142 and execution engine 144. When execution manager 140 receives a command from client device 105, execution manager 140 parses the command (e.g., checks the syntax, checks the semantics, etc.) and forwards the command to execution planner 142. Execution planner 142 generates a set of execution plans based on the command. In some embodiments, a set of execution plans includes an ordered set of operations to perform in order to execute the command. Execution planner 142 sends the set of execution plans to execution engine 144.

When execution engine 144 receives the set of execution plans, execution engine 144 executes the set of execution plans. For instance, if the set of execution plans is for a query, execution engine 144 accesses data in database manager 145 and retrieves data from database manager 145 according to the set of execution plans. Execution engine 144 then evaluates the query based on the retrieved data and generates a result set of data based on the evaluation. In some embodiments, evaluating the query may involve scanning the data, applying filters to the data, processing joins on the data, etc. Execution manager 140 sends the result set of data to client device 105.

DB manager 145 is configured to manage data and provide data to execution manager 140. As illustrated, DB manager 145 includes databases 150a-n. In some embodiments, DB manager 145 manages and stores data for databases 150a-n in memory (e.g., random access memory (RAM)). DB manager 145 may maintain different versions of data for databases 150a-n. A version of data may include data in a database at a defined point in time (e.g., data in the database on a day in the previous week, month, year, etc.). That is, a version of data is a snapshot of a database at a defined point in time.

Each database 150 (as shown in database 150a in this example) includes column store 152, metadata store 154, column data cache 156, metadata cache 158, and fragment manager 160. Column store 152 is configured to store data in tables as columns of data. Metadata store 154 is configured to store data associated with data stored in column store 152. For instance, metadata store 154 may store definitions of relational tables, columns, views, indexes, and procedures. In some embodiments, metadata store 154 stores data in tables as rows of data. Column data cache 156 is configured to store frequently used and/or accessed data in column store 152. Similarly, metadata cache 158 is configured to store frequently used and/or accessed data in metadata store 154. While FIG. 1 illustrates certain stores and caches, one of ordinary skill in the art will appreciate that additional and/or different stores and/or caches may be included in each database 150 in some embodiments. For instance, a database 150 may also include a row store configured to store data in tables as rows of data, a row cache configured to store frequently used and/or accessed data in the row stores, a transaction context store configured to store contexts of transactions, a transaction context cache configured to store frequently used and/or accessed transaction contexts, etc.

Fragment manager 160 manages fragments of memory that are used to store data in column store 152 and metadata store 154. In some embodiments, a fragment of memory (also referred to simply as a fragment) is a contiguous block of memory (e.g., a contiguous block of memory addresses). Fragment manager 160 receives contiguous blocks of memory (also referred to as memory segments) from memory manager 165 and creates fragments from the memory segments.

DB manager 145 may group fragments into logical data structures that are used by DB manager 145 to store data in databases 150a-n. Examples of logical data structures may include relational tables, index data structures (e.g., tries, b-trees, etc.), etc. Once fragments are logically grouped for a particular data structure, DB manager 145 stores data of data structure in the group of fragments. Data of a particular logical data structure may be stored in contiguous fragments (i.e., contiguous blocks of contiguous memory addresses), non-contiguous fragments (i.e., non-contiguous blocks of contiguous memory addresses), or a combination thereof. Logical data structures may be used to store any number of different type of data. For example, logical data structures may be used to store tables, metadata, indexes of tables, etc.

DB manager 145 also manages atomic operations that are performed on logical data structures. In some embodiments, an atomic operation is a set of operations that occur together. If at least one operation in the set operations fails, none of operations in the set of operations are performed (e.g., operations that may have been performed are rolled back). One example atomic operation includes updating column data of a table in a database and updating a corresponding index of the column. If for some reason, the index of the column cannot be updated, the column data is not updated and vice versa.

Memory manager 165 is configured to manage a pool of memory that memory manager 165 receives from operating system 115. As shown, memory manager 165 includes segment allocator 170, which is configured to provide memory segments to DB manager 145. For instance, when memory manager 165 receives a request from fragment manager 160 for a particular size block of memory, memory manager 165 instructs segment allocator 170 to allocate a set of memory segments that satisfies the request. Memory manager 165 then sends a set of memory addresses associated with the set of allocated memory segments to fragment manager 160,

Memory manager 165 also handles the paging of memory used by DB manager 145. For instance, memory manager 165 may receive from DB manager 145 a request for certain fragments to be in memory (e.g., fragments storing data in a database 150 that will be used for a query), memory manager 165 unloads fragments in memory to a secondary storage 130 (e.g., by instructing operating system 115 to unload the fragments to the secondary storage 130) and/or loads the certain fragments into memory (e.g., by instructing operating system 115 to load the certain fragments from the secondary storage 130 into memory).

Memory manager 165 may use any number of different paging methodologies to determine fragments to unload from memory to a secondary storage 130. Examples of paging methodologies utilized by memory manager 165 include a least recently used methodology, a least frequently used methodology, a clock page replacement methodology, a random methodology, a biggest fragment first methodology, a data aging methodology, a first in, first out (FIFO) methodology, etc. Other methodologies are possible.

Memory manager 165 may monitor how memory is used by DB manager 145. In some embodiments, memory manager performs statistical analysis of memory usage by DB manager 145. Memory manager 165 may use the statistical analysis for different purposes. For instance, in some embodiments, memory manager 165 uses the statistical analysis of memory usage by DB manager 145, along with an aforementioned paging methodology, to determine fragments to unload from memory to a secondary storage 130.

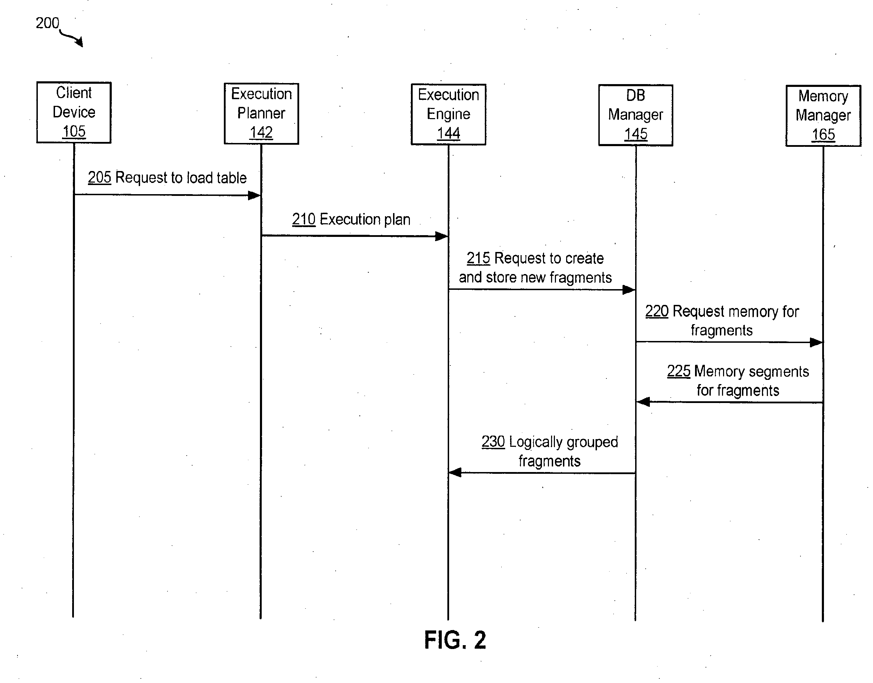

FIG. 2 illustrates an example data flow 200 through the system illustrated in FIG. 1 according to some embodiments. For this example, DB manager 145 has created a table with forty partitions. The table, called Users, includes two columns: user_id and user_name. The data type of the columns are 64-bit integers and 50-byte character strings, respectively. Data flow 200 illustrates the operation performed by components in system 100 in order to load values from a data source (e.g., a comma separated values (CVS) file) into the Users table.

Data flow 200 starts by client device 105 sending, at 205, execution planner 142 a request to load the Users table with data from the data source. In some embodiments, execution manager 140 parses the request (e.g., checks the query syntax, checks the query semantics, etc.) and forwards the request to execution planner 142. When execution planner 142 receives the request, execution planner 142 generates a set of execution plans. As mentioned above, in some embodiments, a set of execution plans includes an ordered set of operations to perform in order to execute a command. In this example, the set of execution plans includes a set of operations to perform in order to load data into the Users table. Execution planner 142 then sends, at 210, the set of execution plans to execution engine 144.

In some embodiments, execution planner 142 determines a number of rows per fragment and includes the determined number of rows with the set of execution plans. Execution planner 142 determines the number of rows per fragment based on the number of rows per partition of the table, statistical data associated with data in the data source, the history of the database, the current load level of the database (e.g., memory usage of DB manager 145, the number of partitions in the database). Partitions may have different sizes based on the actual data that is inserted into the table and other partition criteria. Partitions may be resized if the partitions become too large (e.g. the partitions are too large to be stored on one computing device). The history of a database may include statistical usage of the database. For example, if data inserts are frequently performed on a database and there is sufficient main memory available, execution planner 142 may dynamically increase the size of fragment increased to reduce the number of fragment allocated. As another example, if the statistical usage of the database indicates that insertions occur in some particular size, then execution planner 142 may adjust the size of the fragments such that an insert operation fills one fragment of memory. Examples of statistical data associated with data in the data source include the number of distinct data values, the distribution of the data values, etc. Execution planner 142 may generate such statistical data by sampling the data values in the data source. For this example, execution planner 142 determines each partition has one million rows and the number of rows per fragment is one.

Once execution engine 144 receives the set of execution plans, execution engine 144. sends, at 215, DB manager 145 a request to create new fragments and store the new fragments in memory. In some embodiments, the request includes the number of row per memory fragment. When DB manager 145 receives the request, DB manager 145 instructs fragment manager 160 to create the new fragments. In response, fragment manager 160 determines the size of fragments for the Users table. In some embodiments, fragment manager 160 determines the size of fragments for a logical data structure based on various factors. Examples of such factors include the fragment encoding (e.g., the physical representation of data values in the logical data structure), the number of rows per fragment determined by the execution planner 142, properties of the hardware of system 100 (e.g., the size of cache memory 122, the size of virtual pages used by operating system 115, etc.). For example, fragment manager 160 determines the size of each fragment to be the same size as the size of an L1 cache memory of a processor 120. As another example, fragment manager 160 may determine the size of each fragment to be the size an L1 cache memory of a processor 120 divided by a defined integer (e.g., twice the number of processing units (e.g., cores) of processor 120). In some embodiments, fragment manager 160 determines the size of each fragment in this manner for logical data structures (e.g., trie logical data structures). As yet another example, fragment manager 160 may determine the size of each fragment to be a multiple (e.g., two, three, five, etc.) of the size of a virtual page managed by operating system 115.

For this example, fragment manager 160 determines the size of fragments for the user_id column as 8 bytes (user_id is a 64-bit integer) and the size of fragments for the user_name column as 50 bytes (user_name is 50 byte character string). As mentioned above, execution planner 142 determined that each partition has one million rows and the number of rows per fragment is one. Accordingly, fragment manager 160 sends, at 220, memory manager 165 a request for an 8-megabyte (8 bytes X one million rows) memory segment for the user_id column and a 50-megabyte (50 bytes X one million rows) memory segment for the user_name column, for each of the 40 partitions.

When memory manager 165 receives the request from fragment manager 160, memory manager 165 allocates the requested memory segments from the pool of memory managed by memory manager 165 and sends, at 225, the memory segments to fragment manager 145. In this example, memory manager 165 sends 40 8-megabyte memory segments and 40 50-megabyte memory segments to fragment manager 160. Once fragment manager 160 receives the memory segments, fragment manager 160 creates fragments from the memory segments and logically groups the fragments into partitions. For each partition, fragment manager 160 creates one million 8-btye fragments from an 8-megabyte memory segment and one million 50-byte fragments from a 50-megabyte memory segment and logically groups the created fragments for the partition. After creating and logically grouping the fragments, DB manager 145 sends, at 230, the logically grouped fragments to execution engine 144. Upon receiving the logically grouped fragments (partitions), execution engine 144 loads data from the data source into the partitions of the Users table.

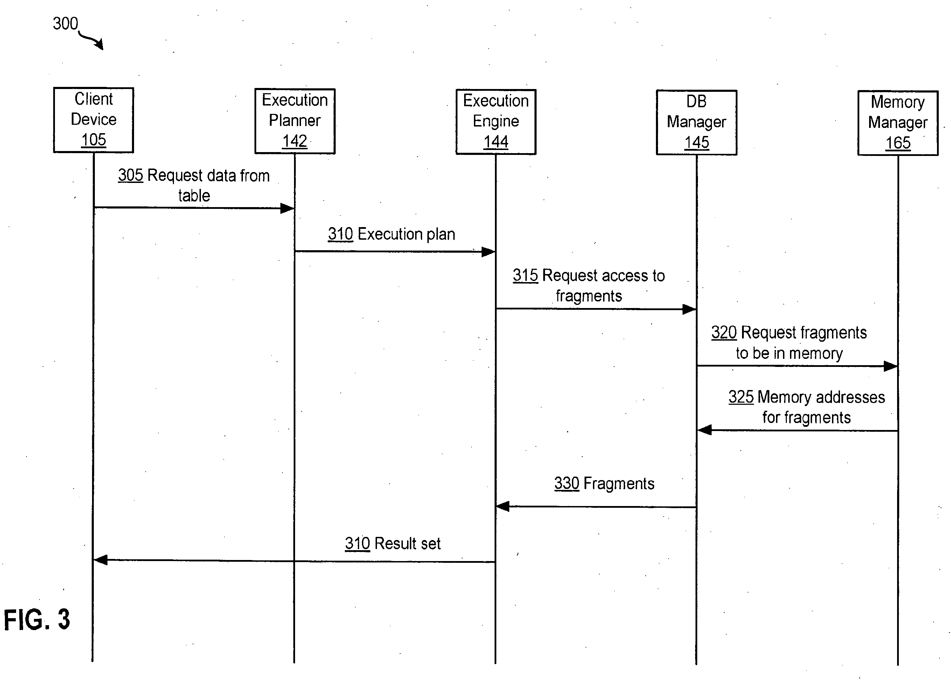

FIG. 3 illustrates another example data flow 300 through the system illustrated in FIG. 1 according to some embodiments. Data flow 300 continues from the example data flow 200 described above. Specifically, data flow 300 illustrates the operation performed by components in system 100 in order to process a query on the Users table.

Data flow 300 begins by client device 105 sending, at 305, execution planner 142 a request for data from the Users table. For this example, the request is for the user_id column data. An example SQL command for such a request may be "SELECT user_id FROM Users." In some embodiments, execution manager 140 parses the request (e.g., checks the query syntax, checks the query semantics, etc.) and forwards the request to execution planner 142. When execution planner 142 receives the request, execution planner 142 generates a set of execution plans. As mentioned above, in some embodiments, a set of execution plans includes an ordered set of operations to perform in order to execute a command. In this example, the set of execution plans includes a set of operations to perform in order to retrieve the user_id column data from the Users table. Execution planner 142 then sends, at 310, the set of execution plans to execution engine 144.

Upon receiving the set of execution plans, execution engine 144 sends, at 315, DB manager 145 a request to access the fragments used to store the partitions of the User table. When DB manager 145 receives the request, DB manager 145 identifies the fragments used to store the partitions of the User table and sends, at 320, memory manager 165 a request for the fragments to be in memory.

Once memory manager 165 receives the request from DB manager 145, memory manager 165 determines whether the requested fragments are in memory. If so, memory manager 165 sends, at 325, the memory addresses of the requested fragments to DB manager 145. Otherwise, memory manager 165 identifies fragments in the requested fragments that are not in memory. Memory manager 165 determines the size of the identified fragments and then loads the identified fragments from a secondary storage 130 into memory. If the pool of memory managed by memory manager 165 does not have enough free memory (i.e., the size of the identified fragments is greater than the amount of free memory in the pool of memory), memory manager 165 determines fragments in the pool of memory to unload from memory to a secondary storage 130. Memory manager 165 may use any of the paging methodologies mentioned above to determine fragments to unload from memory to a secondary storage 130. Once memory manager 165 has unloaded enough fragments from memory to secondary storage 130 to have enough free memory in the pool of memory for the identified fragments, memory manager 165 loads the identified fragments from the secondary storage 130 into memory. Memory manager 165 then sends, at 325, the memory addresses of the requested fragments to DB manager 145.

After receiving the memory addresses of the requested fragments, DB manager 145 provides, at 330, access to the fragments to execution engine 144. Upon receiving access to the fragments, execution engine 144 executes the set of execution plans on the fragments. For this example, execution engine 144 evaluates the query based on the fragments and generates a result set of data based on the evaluation. The result set of data in this .example is the column data for the user_id column in the Users table.

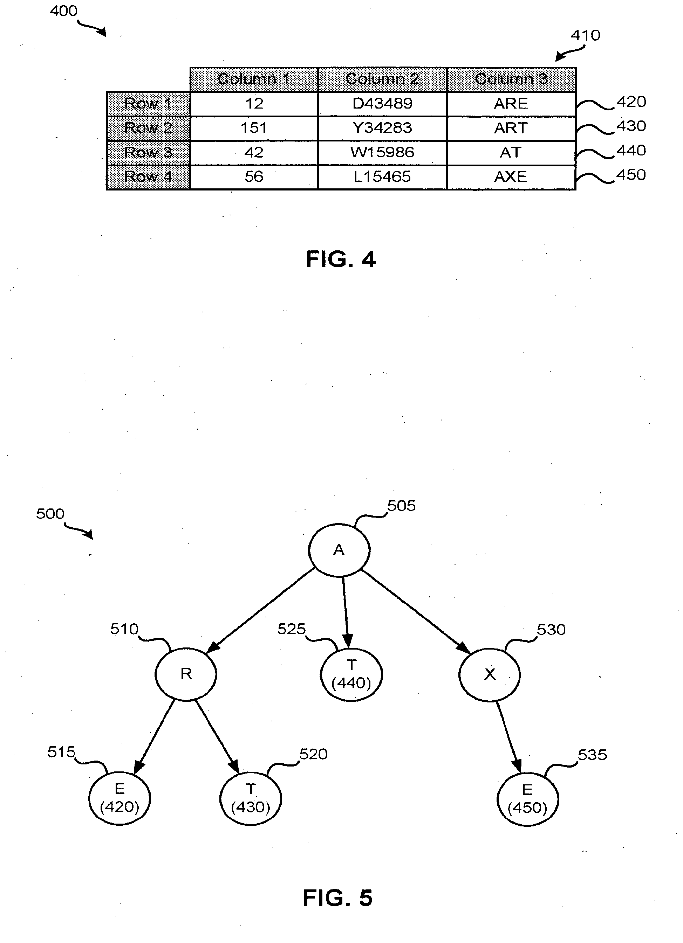

As explained above, DB manager 145 may group fragments into logical data structures that are used by DB manager 145 to store data in databases 150a-n. DB manager 145 may employ any number of different techniques for grouping fragments into logical data structures. In some embodiments, DB manager 145 utilizes a technique for grouping fragments into logical data structures that reduces and/or avoids cache misses in processors 120. In some embodiments, a cache miss occurs when data requested by a processor 120 is not stored in cache memory 122, which results in processor 120 retrieving the data from memory 125 or a secondary storage 130. The following FIGS. 4-7 illustrate an example of such a technique.

FIG. 4 illustrates an example table 400 according to some embodiments. As shown, table 400 includes three columns and four rows. Column 410 (labeled "Column 3" in this example) includes four rows 420-450 of character string data: "ARE," "ART," AT," and "AXE." Table 400 is an example table shown for the purposes of simplicity and explanation. One of ordinary skill will understand that table 400 may include additional and/or different columns and/or rows. In some embodiments, a table (e.g., table 400) in a relational database is a logical data structure. In this example, table 400 is a table of a column-oriented database. DB manager 145 may store the column data of column 410 using any number of different logical data structures (e.g., a trie data structure).

FIG. 5 illustrates an example data structure 500 for storing data of a column of table 400 illustrated in FIG. 4 according to some embodiments. In particular, data structure 500 is a trie data structure used for storing data in column 410 of table 400. In some embodiments, a trie data structure is an ordered tree data structure where a position of a node in the tree specifies the key with which the node is associated. Descendants of a particular node share a common prefix of the string associated with the particular node.

As illustrated, data structure 500 includes nodes 505-535. Node 505 is a root node and nodes 510, 525, and 530 are children of node 505. Nodes 515 and 520 are children of nod 510. Node 535 is a child of node 530. For this example, the key associated with node 505 is "A. The keys associated with nodes 510, 525, and 530 are "AR," "AT," and "AX," respectively. The keys associated with nodes 5151 and 520 are "ARE" and ART," respectively. The key associated with node 535 is "AXE." Additionally, node 515 includes a reference to row 420, which is the row in which "ARE" is stored for column 3. Similarly, node 520 includes a reference to row 430, which is the row in which "ART" is stored for column 3 and node 525 includes a reference to row 440, which is the row in which "AT" is stored for column 3. Lastly, node 535 includes a reference to row 450, which is the row in which "AXE" is stored for column 3. In some embodiments a trie data structure is traversed using a depth-first traversal technique. For example, a traversal of data structure 500 using such a traversal technique results in the traversal of nodes 505-535 in the following order: 505, 510, 515, 520, 525, 530, and 535.

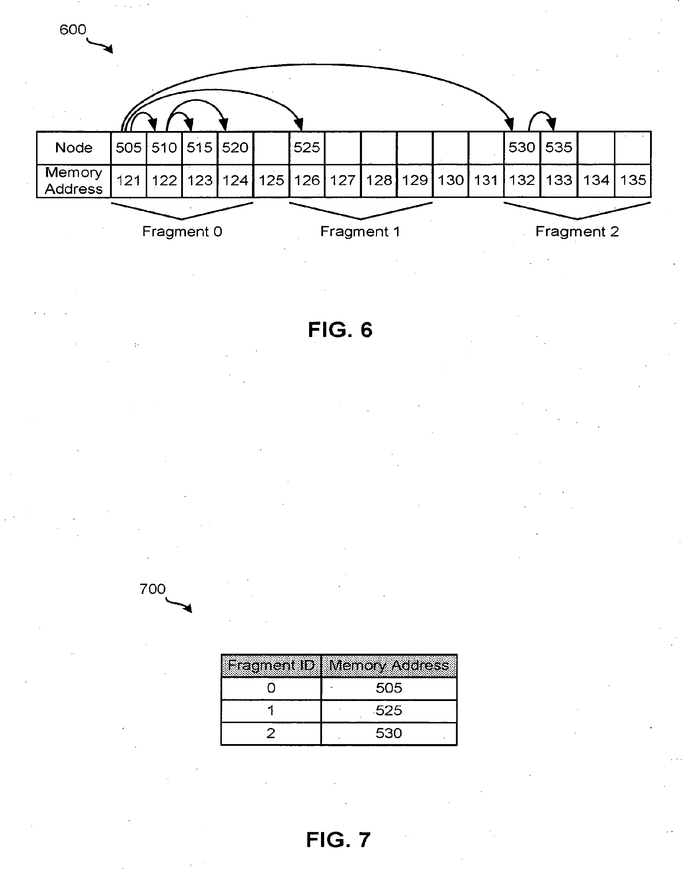

FIG. 6 illustrates an example layout of memory 600 used to store the data structure illustrated in FIG. 5 according to some embodiments. Specifically, FIG. 6 illustrates an example layout of fragments in memory 600 that are used to store data structure 500. In some embodiments, DB manager 145 stores data structure 500 in such a manner. As illustrated, fragment 0 is used to store nodes 505-520, fragment 1 is used to store node 525, and fragment 2 is used to store nodes 530 and 535. FIG. 6 also shows the memory address at which a particular node is stored. Nodes 505-520 are stored at memory addresses 121-124, respectively. Node 525 is stored at memory address 125. Nodes 530 and 535 are stored at memory addresses 132 and 133, respectively. The memory addresses shown in FIG. 6 are used for the purposes of simplicity and explanation. One of ordinary skill in the art will understand that memory addresses may have different values and fragments 0-2 may be stored at any number of different memory addresses and in different orders (e.g., fragment 1 may be stored at a lower memory address than fragments 0 and 2, etc.).

FIG. 6 also illustrates arrows connecting nodes 505-535 in the same manner as nodes 505-535 are connected in FIG. 5. In some embodiments, DB manager 145 implements the links connecting nodes 505-535 using a fragment identifier (0, 1, and 2 for fragments 0, 1, and 2 in this example) and a fragment offset value. Thus, in some such embodiments, node 505 stores the links to nodes 510, 525, and 530 as [0,1], [1,0], and [2,0], respectively. Node 510 stores the links to nodes 515 and 520 as [0,2] and [0,3], respectively. Node 530 stores the link to node 535 as [2,1].

DB manager 145 may also store mappings between fragment identifiers and memory addresses. FIG. 7 illustrates an example table 700 of fragment identifiers and memory addresses according to some embodiments. In particular, FIG. 7 illustrates a mapping between fragment identifiers and memory addresses according to fragments 0-2 and memory 600 as illustrated in FIG. 6. As shown, table 700 includes a mapping of fragment 0 to memory address 505, fragment 1 to memory address 525, and fragment 2 to memory address 530.

Memory manager 165 may unload (e.g., using any of the paging methodologies described above) any of fragments 0-2 from memory 600 to a secondary store 130 for a variety of reasons. For instance, memory manager 165 may need additional free memory in order to allocate memory or load data from a secondary storage 130 into memory. One or more of fragments 0-2 may be selected to be unloaded to the secondary storage 130. When DB manager 145 requests an unloaded fragment to be in memory, memory manager 165 loads the requested fragment from the secondary storage 130 to memory 600 and sends DB manager 145 the memory addresses of the fragments in memory 600. In some instances, the memory address to which the requested fragment is loaded is different than the memory address at which the requested fragment was previously stored. Accordingly, upon receiving the memory address, DB manager 145 updates table 700 with the memory address. Using this technique allows portions of data structure 500 in memory 600 to be accessed while portions of data structure 500 are unloaded in a secondary storage 130. Furthermore, unloading data structure 500 to a secondary storage 130 does not require serialization of data structure 500.

As explained above, fragment manager 160 may determine the size of fragments for a logical data structure based on various factors including the size of cache memory 122. For instance, fragment manager 160 determines the size of each fragment 0-2 to be the size of an L1 cache memory (e.g., 32 kilobytes (KB), 64 KB, etc.) of cache memory 122. Thus, by having an entire fragment in cache memory 122, cache misses may be avoided when DB manager 145 requests access to data structure 500. For instance, if client device 105 requests data from table 400 where column 3 contains the value "ART," memory manager 165 loads fragment 0 into memory 600. A processor 120 may traverse data structure 500 starting with node 505, which causes processor to store fragment 0 in cache memory 122. When the processor 120 traverses nodes 510, 515, and 520, no cache misses occur since fragment 0 is stored in cache memory 122. In an approach where nodes 505-535 are each stored at a random memory address, cache misses may occur each time a node in data structure 500 is accesses. Thus, the technique described above reduces and/or avoids cache misses when accessing data structure 500.

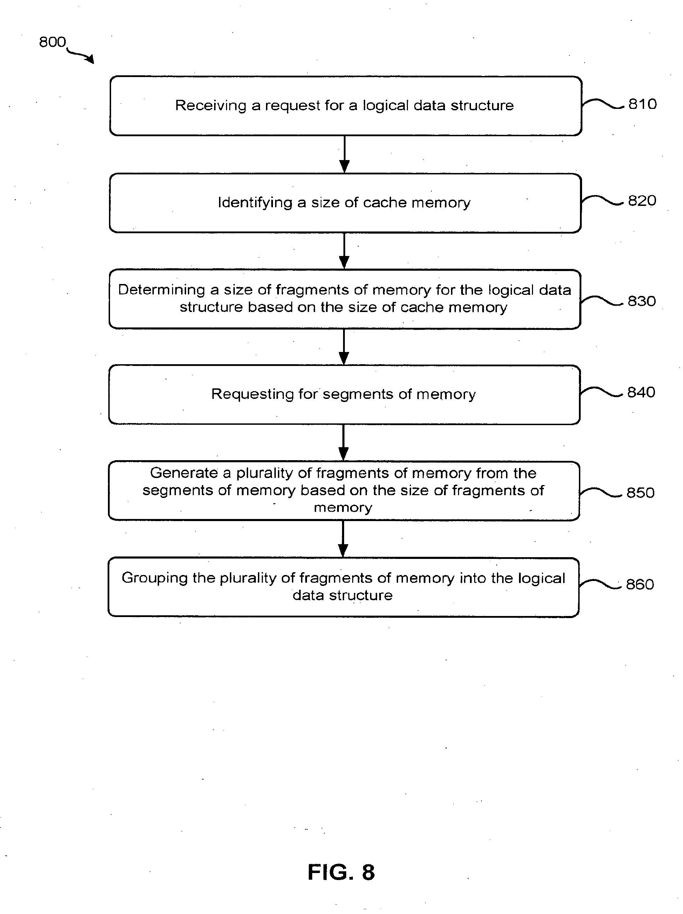

FIG. 8 illustrates a process 800 for creating a logical data structure according to some embodiments. In some embodiments, DB manager 145 performs process 800. Process 800 starts by receiving, at 810, a request for a logical data structure. Process 800 may receive the request from execution engine 144 (e.g., a request to create new fragments and store the new fragments in memory as explained above by reference to the example in FIG. 2).

Next, process 800 identifies, at 820, a size of cache memory of a processor. Referring to FIG. 1 as an example, process 800 may identify the size of cache memory 122 of a processor 120. Based on the size of the cache memory, process 800 then determines, at 830, a size of fragments of memory for the logical data structure. Referring to FIGS. 5 and 6 as an example, process 800 may determine the size of fragments of memory for data structure 500 as 32KB since the size of the L1 cache memory in that example is 32KB.

At 840, process 800 requests for segments of memory. Referring to FIG. 1 as an example, process 800 may request the segments of memory from memory manager 165. Once memory manager 165 allocates the requested memory, process 800 receives the requested segments of memory from memory manager 165. Next, process 800 generates, at 850, a plurality of fragments of memory from the segments of memory based on the size of fragments of memory. Referring to FIGS. 5 and 6 as an example, process 800 generates three fragments 0-2 from a segment of memory that is at least 96KB in size. Each fragment has a size of 32KB.

Finally, process 800 groups, at 860, the plurality of fragments of memory into the logical data structure. Process 800 configures the plurality of fragments to store data of the logical data structure. Referring to FIGS. 5 and 6 as an example, process 800 groups fragments 0-2 into data structure 500. Specifically, process 800 configures fragment 0 to store nodes 505-520, fragment 1 to store node 525, and fragment 2 to store nodes 530 and 535.

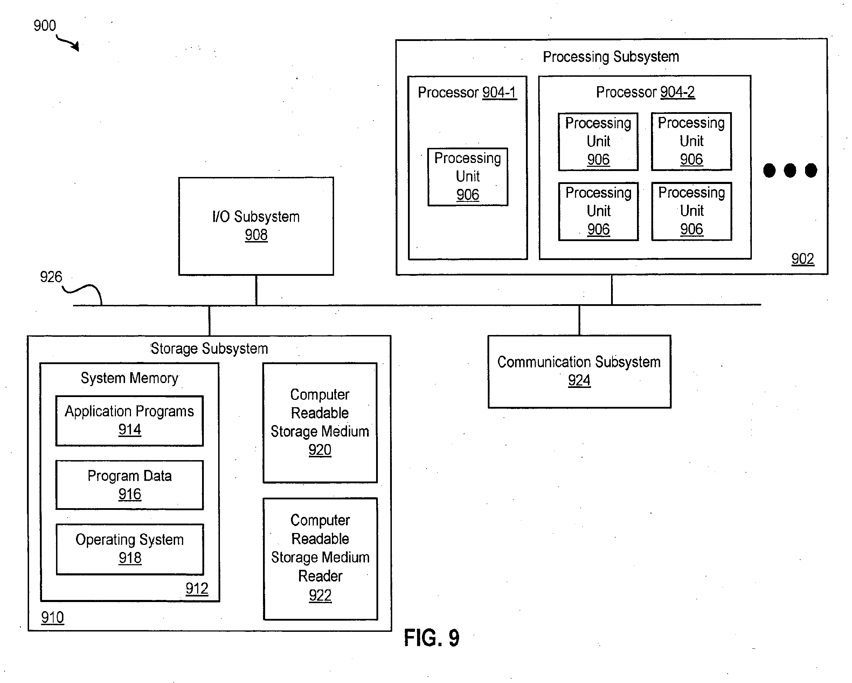

FIG. 9 illustrates an exemplary computer system 900, in which various embodiments may be implemented. For example, computer system 900 may be used to implement client device 105 and/or system 100 described above by reference to FIG. 1. Computer system 900 may be a desktop computer, a laptop, a server computer, or any other type of computer system or combination thereof. Some or all elements of system 100 in FIG. 1, or combinations thereof can be included or implemented in computer system 900. In addition, computer system 900 can implement many of the operations, methods, and/or processes described above (e.g., process 800). As shown in FIG. 9, computer system 900 includes processing subsystem 902, which communicates, via bus subsystem 902, with input/output (I/O) subsystem 908, storage subsystem 910 and communication subsystem 924.

Bus subsystem 902 is configured to facilitate communication among the various components and subsystems of computer system 900. While bus subsystem 902 is illustrated in FIG. 9 as a single bus, one of ordinary skill in the art will understand that bus subsystem 902 may be implemented as multiple buses. Bus subsystem 902 may be any of several types of bus structures (e.g., a memory bus or memory controller, a peripheral bus, a local bus, etc.) using any of a variety of bus architectures. Examples of bus architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, a Universal Serial Bus (USB), etc.

Processing subsystem 902, which can be implemented as one or more integrated circuits (e.g., a conventional microprocessor or microcontroller), controls the operation of computer system 900. Processing subsystem 902 may include one or more processors 904. Each processor 904 may include one processing unit 906 (e.g., a single core processor such as processor 904-1) or several processing units 906 (e.g., a multicore processor such as processor 904-2). In some embodiments, processors 904 of processing subsystem 902 may be implemented as independent processors while, in other embodiments, processors 904 of processing subsystem 902 may be implemented as multiple processors integrate into a single chip or multiple chips. Still, in some embodiments, processors 904 of processing subsystem 902 may be implemented as a combination of independent processors and multiple processors integrated into a single chip or multiple chips.

In some embodiments, processing subsystem 902 can execute a variety of programs or processes in response to program code and can maintain multiple concurrently executing programs or processes. At any given time, some or all of the program code to be executed can reside in processing subsystem 902 and/or in storage subsystem 910. Through suitable programming, processing subsystem 902 can provide various functionalities, such as the functionalities described above by reference to process 800.

I/O subsystem 908 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 900 to a user or another device (e.g., a printer).

As illustrated in FIG. 9, storage subsystem 910 includes system memory 912, computer-readable storage medium 920, and computer-readable storage medium reader 922. System memory 912 may be configured to store software in the form of program instructions that are loadable and executable by processing subsystem 902 as well as data generated during the execution of program instructions. In some embodiments, system memory 912 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). System memory 912 may include different types of memory, such as static random access memory (SRAM) and/or dynamic random access memory (DRAM). System memory 912 may include a basic input/output system (BIOS), in some embodiments, that is configured to store basic routines to facilitate transferring information between elements within computer system 900 (e.g., during start-up). Such a BIOS may be stored in ROM (e.g., a ROM chip), flash memory, or any other type of memory that may be configured to store the BIOS.

As shown in FIG. 9, system memory 912 includes application programs 914 (e.g., DBMS 110), program data 916, and operating system (OS) 918. OS 918 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Computer-readable storage medium 920 may be a non-transitory computer-readable medium configured to store software (e.g., programs, code modules, data constructs, instructions, etc.). Many of the components (e.g., DBMS 110) and/or processes (e.g., process 800) described above may be implemented as software that when executed by a processor or processing unit (e.g., a processor or processing unit of processing subsystem 902) performs the operations of such components and/or processes. Storage subsystem 910 may also store data used for, or generated during, the execution of the software.

Storage subsystem 910 may also include computer-readable storage medium reader 922 that is configured to communicate with computer-readable storage medium 920. Together and, optionally, in combination with system memory 912, computer-readable storage medium 920 may comprehensively represent remote, local, fixed, and/or removable storage devices plus storage media for temporarily and/or more permanently containing, storing, transmitting, and retrieving computer-readable information.

Computer-readable storage medium 920 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device.

Communication subsystem 924 serves as an interface for receiving data from, and transmitting data to, other devices, computer systems, and networks. For example, communication subsystem 924 may allow computer system 900 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 924 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 924 may provide components configured for wired communication (e.g., Ethernet) in addition to or instead of components configured for wireless communication.

One of ordinary skill in the art will realize that the architecture shown in FIG. 9 is only an example architecture of computer system 900, and that computer system 900 may have additional or fewer components than shown, or a different configuration of components. The various components shown in FIG. 9 may be implemented in hardware, software, firmware or any combination thereof, including one or more signal processing and/or application specific integrated circuits.

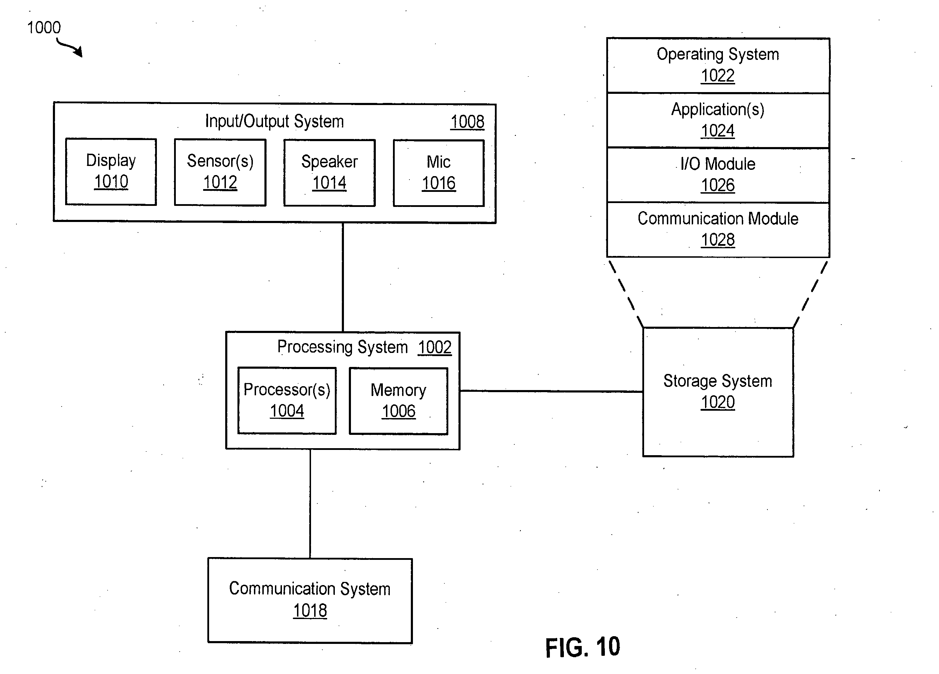

FIG. 10 illustrates an exemplary computing device 1000, in which various embodiments may be implemented. For example, computing device 1000 may be used to implement client device 105 described above by reference to FIG. 1. Computing device 1000 may be a cellphone, a smartphone, a wearable device, an activity tracker or manager, a tablet, a personal digital assistant (PDA), a media player, or any other type of mobile computing device or combination thereof. As shown in FIG. 10, computing device 1000 includes processing system 1002, input/output (I/O) system 1008, communication system 1018, and storage system 1020. These components may be coupled by one or more communication buses or signal lines.

Processing system 1002, which can be implemented as one or more integrated circuits (e.g., a conventional microprocessor or microcontroller), controls the operation of computing device 1000. As shown, processing system 1002 includes one or more processors 1004 and memory 1006. Processors 1004 are configured to run or execute various software and/or sets of instructions stored in memory 1006 to perform various functions for computing device 1000 and to process data.

Each processor of processors 1004 may include one processing unit (e.g., a single core processor) or several processing units (e.g., a multicore processor). In some embodiments, processors 1004 of processing system 1002 may be implemented as independent processors while, in other embodiments, processors 1004 of processing system 1002 may be implemented as multiple processors integrate into a single chip. Still, in some embodiments, processors 1004 of processing system 1002 may be implemented as a combination of independent processors and multiple processors integrated into a single chip.

Memory 1006 may be configured to receive and store software (e.g., operating system 1022, applications 1024, I/O module 1026, communication module 1028, etc. from storage system 1020) in the form of program instructions that are loadable and executable by processors 1004 as well as data generated during the execution of program instructions. In some embodiments, memory 1006 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 1008 is responsible for receiving input through various components and providing output through various components. As shown for this example, I/O system 1008 includes display 1010, one or more sensors 1012, speaker 1014, and microphone 1016. Display 1010 is configured to output visual information (e.g., a graphical user interface (GUI) generated and/or rendered by processors 1004). In some embodiments, display 1010 is a touch screen that is configured to also receive touch-based input. Display 1010 may be implemented using liquid crystal display (LCD) technology, light-emitting diode (LED) technology, organic LED (OLED) technology, organic electro luminescence (OEL) technology, or any other type of display technologies. Sensors 1012 may include any number of different types of sensors for measuring a physical quantity (e.g., temperature, force, pressure, acceleration, orientation, light, radiation, etc.). Speaker 1014 is configured to output audio information and microphone 1016 is configured to receive audio input. One of ordinary skill in the art will appreciate that I/O system 1008 may include any number of additional, fewer, and/or different components. For instance, I/O system 1008 may include a keypad or keyboard for receiving input, a port for transmitting data, receiving data and/or power, and/or communicating with another device or component, an image capture component for capturing photos and/or videos, etc.

Communication system 1018 serves as an interface for receiving data from, and transmitting data to, other devices, computer systems, and networks. For example, communication system 1018 may allow computing device 1000 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 1018 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 1018 may provide components configured for wired communication (e.g., Ethernet) in addition to or instead of components configured for wireless communication.

Storage system 1020 handles the storage and management of data for computing device 1000. Storage system 1020 may be implemented by one or more non-transitory machine-readable mediums that are configured to store software (e.g., programs, code modules, data constructs, instructions, etc.) and store data used for, or generated during, the execution of the software.

In this example, storage system 1020 includes operating system 1022, one or more applications 1024, I/O module 1026, and communication module 1028. Operating system 1022 includes various procedures, sets of instructions, software components and/or drivers for controlling and managing general system tasks (e.g., memory management, storage device control, power management, etc.) and facilitates communication between various hardware and software components. Operating system 1022 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Applications 1024 can include any number of different applications installed on computing device 1000. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 1026 manages information received via input components (e.g., display 1010, sensors 1012, and microphone 1016) and information to be outputted via output components (e.g., display 1010 and speaker 1014). Communication module 1028 facilitates communication with other devices via communication system 1018 and includes various software components for handling data received from communication system 1018.

One of ordinary skill in the art will realize that the architecture shown in FIG. 10 is only an example architecture of computing device 1000, and that computing device 1000 may have additional or fewer components than shown, or a different configuration of components. The various components shown in FIG. 10 may be implemented in hardware, software, firmware or any combination thereof, including one or more signal processing and/or application specific integrated circuits.

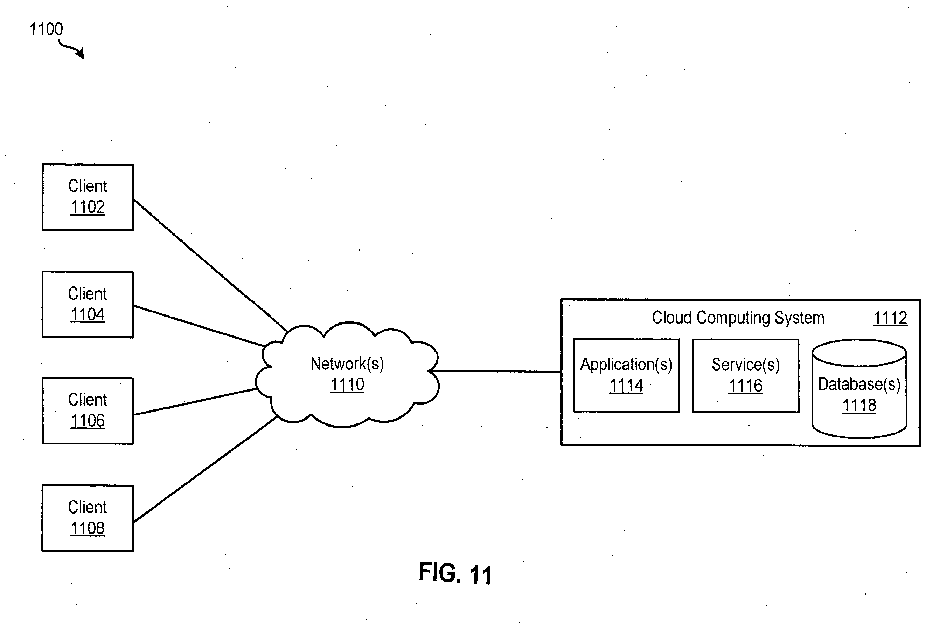

FIG. 11 illustrates system 1100 for implementing various embodiments described above. For example, system 1100 may be used to implement system 100 of FIG 1. As shown, system 1100 includes client devices 1102-1108, one or more networks 1110, and cloud computing system 1112. Cloud computing system 1112 is configured to provide resources and data to client devices 1102-1108 via networks 1110. In some embodiments, cloud computing system 1100 provides resources to any number of different users (e.g., customers, tenants, organizations, etc.). Cloud computing system 1112 may be implemented by one or more computer systems (e.g., servers), virtual machines operating on a computer system, or a combination thereof.

As shown, cloud computing system 1112 includes one or more applications 1114, one or more services 1116, and one or more databases 1118. Cloud computing system 1100 may provide applications 1114, services 1116, and databases 1118 to any number of different customers in a self-service, subscription-based, elastically scalable, reliable, highly available, and secure manner.

In some embodiments, cloud computing system 1100 may be adapted to automatically provision, manage, and track a customer's subscriptions to services offered by cloud computing system 1100. Cloud computing system 1100 may provide cloud services via different deployment models. For example, cloud services may be provided under a public cloud model in which cloud computing system 1100 is owned by an organization selling cloud services and the cloud services are made available to the general public or different industry enterprises. As another example, cloud services may be provided under a private cloud model in which cloud computing system 1100 is operated solely for a single organization and may provide cloud services for one or more entities within the organization. The cloud services may also be provided under a community cloud model in which cloud computing system 1100 and the cloud services provided by cloud computing system 1100 are shared by several organizations in a related community. The cloud services may also be provided under a hybrid cloud model, which is a combination of two or more of the aforementioned different models.

In some instances, any one of applications 1114, services 1116, and databases 1118 made available to client devices 1102-1108 via networks 1110 from cloud computing system 1100 is referred to as a "cloud service." Typically, servers and systems that make up cloud computing system 1100 are different from the on-premises servers and systems of a customer. For example, cloud computing system 1100 may host an application and a user of one of client devices 1102-1108 may order and use the application via networks 1110.

Applications 1114 may include software applications that are configured to execute on cloud computing system 1112 (e.g., a computer system or a virtual machine operating on a computer system) and be accessed, controlled, managed, etc. via client devices 1102-1108. In some embodiments, applications 1114 may include server applications and/or mid-tier applications (e.g., HTTP (hypertext transport protocol) server applications, FTP (file transfer protocol) server applications, CGI (common gateway interface) server applications, JAVA server applications, etc.) Services 1116 are software components, modules, application, etc. that are configured to execute on cloud computing system 1112 and provide functionalities to client devices 1102-1108 via networks 1110. Services 1116 may be web-based services or on-demand cloud services.

Databases 1118 are configured to store and/or manage data that is accessed by applications 1114, services 1116, and/or client devices 1102-1108. Databases 1118 may reside on a non-transitory storage medium local to (and/or resident in) cloud computing system 1112, in a storage-area network (SAN), on a non-transitory storage medium local located remotely from cloud computing system 1112. In some embodiments, databases 1118 may include relational databases that are managed by a relational database management system (RDBMS). Databases 1118 may be a column-oriented databases, row-oriented databases, or a combination thereof. In some embodiments, some or all of databases 1118 are in-memory databases. That is, in some such embodiments, data for databases 1118 are stored and managed in memory (e.g., random access memory (RAM)).

Client devices 1102-1108 are configured to execute and operate a client application (e.g., a web browser, a proprietary client application, etc.) that communicates with applications 1114, services 1116, and/or databases 1118 via networks 1110. This way, client devices 1102-1108 may access the various functionalities provided by applications 1114, services 1116, and databases 1118 while applications 1114, services 1116, and databases 1118 are operating (e.g., hosted) on cloud computing system 1100. Client devices 1102-1108 may be computer system 1000 or computing device 1100, as described above by reference to FIGS 10 and 11, respectively. Although system 1100 is shown with four client devices, any number of client devices may be supported.

Networks 1110 may be any type of network configured to facilitate data communications among client devices 1102-1108 and cloud computing system 1112 using any of a variety of network protocols. Networks 1110 maybe a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

## Claims

1. A method (200; 800) comprising:
receiving (810; 215) a request for creating a logical data structure (500) of an in-memory database (150), the in-memory database on a commodity computing system including personal computers, desktop computers, and/or laptop computers, the request for creating and storing new fragments in memory;
determining (830) a size of fragments of memory (600) for the logical data structure (500) based on a set of criteria, wherein the size of each fragment is determined to be a same size as a size of an L1 cache memory;
requesting (840; 220) a set of segments of memory (600), wherein the requested memory segments are allocated based on the size of fragments;
upon receiving (225) the set of segments of memory, generating (850) a plurality of fragments of memory from the set of segments of memory;
grouping (860; 230) the plurality of fragments of memory (600) into the logical data structure (500), the plurality of fragments of memory configured to store data of the logical data structure (500); and
after creating and logically grouping the fragments, loading the plurality of logically grouped fragments of memory into memory;
wherein the logical data structure (500) includes a trie data structure, the trie data structure being an ordered tree data structure including a plurality of nodes, wherein a first fragment of the fragments includes a root of the tree, a first child node of the root, and descendants of the first child node, and wherein a second fragment and subsequent fragments include a second child node of the root with its descendants and each of further children nodes of the root with their descendants, respectively;
wherein the trie data structure is traversed using a depth-first traversal technique.

2. The method of claim 1 further comprising determining a number of rows (420-450) per fragment of memory, wherein determining the size of fragments of memory is further based on the number of rows per fragment.

3. The method of claim 1 or 2, wherein the set of criteria comprises statistical data associated with data to be stored in the logical data structure (500).

4. The method of any one of the preceding claims, wherein the in-memory database (150) is a column-oriented database.

5. The method of any one of the preceding claims, wherein the logical data structure (500) is for a partition of a table of the in-memory database (150).

6. The method of any one of the preceding claims further comprising unloading at least one fragment of memory from the memory (600) into a secondary storage (130) using a paging technique in a plurality of paging techniques.

7. The method of any one of the preceding claims, wherein the request is a first request, wherein the logical data structure (500) is a first logical data structure, wherein the size of fragments of memory is a first size of fragments of memory, wherein the set of segments of memory is a first set of segments of memory, wherein the plurality of fragments is a first plurality of fragments, wherein the method further comprises:
receiving a second request for a second logical data structure of the in-memory database (150);
determining a second size of fragments of memory for the second logical data structure based on the set of criteria, wherein the second size and the first size are different;
requesting a second set of segments of memory;
upon receiving the second set of segments of memory, generating a second plurality of fragments of memory from the second set of segments of memory based on the second size of fragments of memory;
grouping the second plurality of fragments of memory into the second logical data structure, the second plurality of fragments of memory configured to store data of the second logical data structure; and
loading the second plurality of fragments of memory into the memory.

8. A non-transitory machine-readable medium storing a program executable by at least one processing unit of a device, the program comprising sets of instructions for performing operations according to a method of any one of the claims 1 to 7.

9. A system comprising:
a set of processing units; and
a non-transitory computer-readable medium storing instructions that when executed by at least one processing unit in the set of processing units cause the at least one processing unit to perform operations according to a method of any one of the claims 1 to 7.

## Patentansprüche

1. Verfahren (200; 800), umfassend:
Empfangen (810; 215) einer Aufforderung zum Erstellen einer logischen Datenstruktur (500) einer speicherinternen Datenbank (150), wobei die speicherinterne Datenbank auf einem Commodity-Computing-System ist, das PCs, Desktop-PCs und/oder Laptop-PCs umfasst, wobei die Aufforderung zum Erstellen und Speichern neuer Fragmente im Speicher dient;
Bestimmen (830) einer Größe von Speicherfragmenten (600) für die logische Datenstruktur (500) auf Basis eines Kriteriensatzes, wobei bestimmt wird, dass die Größe jedes Fragments so groß wie eine Größe eines L1-Cache-Speichers ist;
Anfordern (840; 220) eines Speichersegmentsatzes (600), wobei die angeforderten Speichersegmente auf Basis der Größe von Fragmenten zugewiesen werden;
bei Empfangen (225) des Speichersegmentsatzes, Generieren (850) einer Vielzahl von Speicherfragmenten aus dem Speichersegmentsatz;
Gruppieren (860; 230) der Vielzahl von Speicherfragmenten (600) in die logische Datenstruktur (500), wobei die Vielzahl von Speicherfragmenten zum Speichern von Daten der logischen Datenstruktur (500) konfiguriert ist; und
nach Erstellen und logischem Gruppieren der Fragmente, Laden der Vielzahl von logisch gruppierten Speicherfragmenten in den Speicher;
wobei die logische Datenstruktur (500) eine Trie-Datenstruktur beinhaltet, wobei die Trie-Datenstruktur eine geordnete Baum-Datenstruktur ist, die eine Vielzahl von Knoten beinhaltet, wobei ein erstes Fragment der Fragmente eine Wurzel des Baums, einen ersten Kind-Koten der Wurzel und Nachfolger des ersten Kind-Knotens beinhaltet und wobei ein zweites Fragment und nachfolgende Fragmente einen zweiten Kind-Knoten der Wurzel mit seinen Nachfolgern bzw. jeden von weiteren Kind-Knoten der Wurzel mit ihren Nachfolgern umfassen;
wobei die Trie-Datenstruktur unter Verwendung einer Depth-First-Traversal-Technik durchlaufen wird.

2. Verfahren nach Anspruch 1, ferner umfassend das Bestimmen einer Anzahl von Zeilen (420 - 450) pro Speicherfragment, wobei das Bestimmen der Größe von Speicherfragmenten ferner auf der Anzahl von Zeilen pro Fragment basiert.

3. Verfahren nach Anspruch 1 oder 2, wobei der Kriteriensatz statistische Daten aufweist, die mit in der logischen Datenstruktur (500) zu speichernden Daten verbunden sind.

4. Verfahren nach einem der vorhergehenden Ansprüche, wobei die speicherinterne Datenbank (150) eine spaltenorientierte Datenbank ist.

5. Verfahren nach einem der vorhergehenden Ansprüche, wobei die logische Datenstruktur (500) einer Partition einer Tabelle der speicherinternen Datenbank (150) dient.

6. Verfahren nach einem der vorhergehenden Ansprüche, ferner umfassend das Entleeren wenigstens eines Speicherfragments aus dem Speicher (600) in einen Sekundärspeicher (130) unter Verwendung einer Paging-Methode in einer Vielzahl von Paging-Methoden.

7. Verfahren nach einem der vorhergehenden Ansprüche, wobei die Aufforderung eine erste Aufforderung ist, wobei die logische Datenstruktur (500) eine erste logische Datenstruktur ist, wobei die Größe von Speicherfragmenten eine erste Größe von Speicherfragmenten ist, wobei der Speichersegmentsatz ein erster Speichersegmentsatz ist, wobei die Vielzahl von Fragmenten eine erste Vielzahl von Fragmenten ist, wobei das Verfahren ferner umfasst:
Empfangen einer zweiten Aufforderung für eine zweite logische Datenstruktur der Speicherdatenbank (150);
Bestimmen einer zweiten Speicherfragmentgröße für die zweite logische Datenstruktur auf Basis des Kriteriensatzes, wobei die zweite Größe und die erste Größe verschieden sind;
Anfordern eines zweiten Speichersegmentsatzes;
bei Empfangen des zweiten Speichersegmentsatzes, Generieren einer zweiten Vielzahl von Speicherfragmenten aus dem zweiten Speichersegmentsatz auf Basis der zweiten Speicherfragmentgröße;
Gruppieren der zweiten Vielzahl von Speicherfragmenten in die zweite logische Datenstruktur, wobei die zweite Vielzahl von Speicherfragmenten zum Speichern von Daten der zweiten logischen Datenstruktur konfiguriert ist; und
Laden der zweiten Vielzahl von Speicherfragmenten in den Speicher.

8. Nichtflüchtiges maschinenlesbares Medium, das ein Programm speichert, das durch wenigstens eine Verarbeitungseinheit einer Vorrichtung ausführbar ist, wobei das Programm Anweisungssätze zum Durchführen von Operationen gemäß einem Verfahren nach einem der Ansprüche 1 bis 7 aufweist.

9. System, aufweisend:
einen Satz Verarbeitungseinheiten; und
ein nichtflüchtiges maschinenlesbares Medium, das Anweisungen speichert, die bei Ausführung durch wenigstens eine Verarbeitungseinheit in dem Satz Verarbeitungseinheiten die wenigstens eine Verarbeitungseinheit zum Durchführen von Operationen gemäß einem Verfahren nach einem der Ansprüche 1 bis 7 veranlassen.

## Revendications

1. Procédé (200 ; 800) comprenant :
la réception (810 ; 215) d'une requête pour créer une structure de données logique (500) d'une base de données en mémoire (150), la base de données en mémoire étant sur un système informatique de base incluant ordinateurs personnels, ordinateurs de bureau et/ou ordinateurs portables, la requête étant destinée à créer et stocker de nouveaux fragments en mémoire ;
la détermination (830) d'une taille de fragments de mémoire (600) pour la structure de données logique (500) sur la base d'un ensemble de critères, dans lequel la taille de chaque fragment est déterminée pour être de la même taille qu'une taille d'une mémoire cache L1 ;
la demande (840 ; 220) d'un ensemble de segments de mémoire (600), dans lequel les segments de mémoire demandés sont alloués sur la base de la taille de fragments ;
à réception (225) de l'ensemble de segments de mémoire, la génération (850) d'une pluralité de fragments de mémoire à partir de l'ensemble de segments de mémoire ;
le regroupement (860 ; 230) de la pluralité de fragments de mémoire (600) en la structure de données logique (500), la pluralité de fragments de mémoire étant configurés pour stocker des données de la structure de données logique (500) ; et
après la création et le regroupement logique des fragments, le chargement de la pluralité de fragments de mémoire regroupés logiquement en mémoire ;
dans lequel la structure de données logique (500) comporte une structure de données arborescente, la structure de données arborescente étant une structure de données arborescente ordonnée comportant une pluralité de nœuds, dans lequel un premier fragment des fragments comporte une racine de l'arborescence, un premier nœud enfant de la racine, et des descendants du premier nœud enfant, et dans lequel un deuxième fragment et des fragments suivants comportent un deuxième nœud enfant de la racine avec ses descendants et chaque nœud enfant d'autres noeuds enfants de la racine avec leurs descendants, respectivement ;
dans lequel la structure de données arborescente est parcourue en utilisant une technique de traversée en profondeur d'abord.

2. Procédé selon la revendication 1, comprenant en outre la détermination d'un nombre de lignes (420-450) par fragment de mémoire, dans lequel la détermination de la taille de fragments de mémoire est basée en outre sur le nombre de lignes par fragment.

3. Procédé selon la revendication 1 ou 2, dans lequel l'ensemble de critères comprend des données statistiques associées à des données devant être stockées dans la structure de données logique (500).

4. Procédé selon l'une quelconque des revendications précédentes, dans lequel la base de données en mémoire (150) est une base de données orientée colonnes.

5. Procédé selon l'une quelconque des revendications précédentes, dans lequel la structure de données logique (500) se destine à une partition d'un tableau de la base de données en mémoire (150).

6. Procédé selon l'une quelconque des revendications précédentes, comprenant en outre le déchargement d'au moins un fragment de mémoire de la mémoire (600) dans un stockage secondaire (130) en utilisant une technique de radiomessagerie parmi une pluralité de techniques de radiomessagerie.

7. Procédé selon l'une quelconque des revendications précédentes, dans lequel la requête est une première requête, dans lequel la structure de données logique (500) est une première structure de données logique, dans lequel la taille de fragments de mémoire est une première taille de fragments de mémoire, dans lequel l'ensemble de segments de mémoire est un premier ensemble de segments de mémoire, dans lequel la pluralité de fragments est une première pluralité de fragments, dans lequel le procédé comprend en outre :
la réception d'une deuxième requête pour une deuxième structure de données logique de la base de données en mémoire (150) ;
la détermination d'une deuxième taille de fragments de mémoire pour la deuxième structure de données logique sur la base de l'ensemble de critères, dans lequel la deuxième taille et la première taille sont différentes ;
la demande d'un deuxième ensemble de segments de mémoire ;
à réception du deuxième ensemble de segments de mémoire, la génération d'une deuxième pluralité de fragments de mémoire à partir du deuxième ensemble de segments de mémoire sur la base de la deuxième taille de fragments de mémoire ;
le regroupement de la deuxième pluralité de fragments de mémoire dans la deuxième structure de données logique, la deuxième pluralité de fragments de mémoire étant configurée pour stocker des données de la deuxième structure de données logique ; et
le chargement de la deuxième pluralité de fragments de mémoire dans la mémoire.

8. Support lisible par machine non transitoire stockant un programme pouvant être exécuté par au moins une unité de traitement d'un dispositif, le programme comprenant des ensembles d'instructions destinées à la réalisation d'opérations selon un procédé selon l'une quelconque des revendications 1 à 7.

9. Système, comprenant :
un ensemble d'unités de traitement ; et
un support lisible par ordinateur non transitoire stockant des instructions qui, lorsqu'elles sont exécutées par au moins une unité de traitement dans l'ensemble d'unités de traitement, amènent l'au moins une unité de traitement à réaliser des opérations selon un procédé selon l'une quelconque des revendications 1 à 7.
